# EUROPEAN PATENT APPLICATION

(11) **EP 4 671 161 A1**
(43) Date of publication of application: **31.12.2025**
(21) Application number: 25182547.7
(22) Date of filing: 13.06.2025
(51) Int. Cl.: B65G 23/16, B65G 23/14

(54) **DRIVE UNIT FOR CHAIN CONEYOR, CHAIN CONVEYOR AND METHOD**

(30) Priority: 27.06.2024 FI 20245822
(71) Applicant: Raumaster Paper Oy, 26100 Rauma (FI)
(72) Inventor: Salo, Kai, 23960 Santtio (FI); Hannula, Jari, 26100 Rauma (FI)
(74) Representative: Papula Oy

(57) **Abstract**

A drive unit, a chain conveyor and a method of conveying objects and material. The drive unit (10) comprises a drive chain (13) comprising several protruding drive teeth (18) which are arranged in engagement with a conveyor chain assembly (3). The drive teeth comprise curved drive surfaces (19) on their side surfaces.

## Description

### Background of the invention

The invention relates to a drive unit of a chain conveyor.

The invention further relates to a chain conveyor and to a method for transporting objects or material.

The field of the invention is defined more specifically in the preambles of the independent claims.

At different production plants and storages different products, rolls, pallets, objects and materials are transported. The transportation can be executed by means of conveyors, such as belt and chain conveyors. The chain conveyors have been found to be reliable and durable conveyors. However, the known chain conveyors have shown to include some problems especially regarding their drive units by means of which their conveying chains are driven.

### Brief description of the invention

An object of the invention is to provide a novel and improved drive unit, chain conveyor and method for transporting objects and materials.

The drive unit according to the invention is characterized by the characterizing features of the first independent apparatus claim.

The chain conveyor according to the invention is characterized by the characterizing features of the second independent apparatus claim.

The method according to the invention is characterized by the characterizing features and steps of an independent method claim.

An idea of the disclosed solution is that a chain conveyor comprises a drive unit for driving a conveyor chain in a longitudinal direction of the chain conveyor. A basic structure of the drive unit comprises a drive chain configured to surround a first sprocket arrangement and a second sprocket arrangement, and also a motor for rotating at least one of the first and second sprocket arrangements for moving the drive chain. The drive chain comprises several interconnected first chain links and several interconnected second chain links which are located at a transverse distance from each other. The first and second chain links comprise several chain pins connecting the successive first chain links together and the successive second chain links together. There are also a plurality of guide rolls supported rotatably to the first and second chain links by means of the chain pins. The drive chain further comprises several drive teeth protruding outwardly from the drive chain and comprising curved drive surfaces for transmitting driving forces from the drive unit to the conveyor chain. Further, each of the mentioned first and second chain links comprises, in the longitudinal direction of the drive chain, a middle point which is located between transverse central axis of the chain pins. Moreover, each curved drive surface comprises a center of curvature and the center of curvature is located away from the middle point a longitudinal distance towards the central axis of the chain pins.

In other words, the disclosed solution implements a caterpillar type drive chain for transmitting driving forces to the conveyor chain of the chain conveyor. Further, there are no drive surfaces on top of the drive teeth.

An advantage of the disclosed solution is that the drive unit takes only little space since it is to be mounted inside a closed loop configuration of the conveyor chain. The structure of the drive unit may be low in vertical direction, which is beneficial when the constructing new conveyor systems, and especially when updating existing conveyors.

Further, an advantage of the new design of the drive teeth is that when the drive surfaces are arranged on the side surfaces of the teeth and are facing towards the direction of travel, then force resultants caused by force vectors are directed so that they pass via an area between central axis of the chain pins. This way jerking of the drive chain and the entire conveyor can be avoided since supporting forces of the drive teeth are better controlled.

In contrast to present solution if providing the drive surfaces on top of the teeth, the drive forces cause torque to the drive teeth and due to the generated torque, the drive teeth try to turn and cause jerking to the structure of the drive chain.

When the problem of torque and the jerking is solved by the use of the drive teeth with the drive surfaces placed in accordance with the disclosed solution, then pitch of the conveying chain can be dimensioned to be shorter than in solutions wherein the drive surfaces are located on top of the teeth. The chain pitch of the conveying chain may be shorter than 100 mm, and preferably shorter than 70 mm. In one practical solution, the pitch is 63 mm.

According to an embodiment, the drive surfaces are curved surfaces having a curvature of radius corresponding to a radius of a diameter of the rolls of the conveyor chain.

According to an embodiment, the centers of curvature are located in vertical alignment with the central axis of the chain pins when examined in the longitudinal direction of the drive chain.

According to an embodiment, the centers of curvature are located at shorter longitudinal distances from the central axis of the chain pins compared to longitudinal distances from the middle points. In other words, the centers of curvature are closer to the central axis of the chain pins than the middle points. It can also be considered this embodiment so that the centers of curvature of the curved drive surfaces are located away from centers of the chain pins and away from the middle points.

According to an embodiment, the drive teeth comprise side surfaces limiting outermost surfaces in the longitudinal direction of the drive chain and wherein the drive surfaces are located only on the side surfaces of the teeth. In other words, each drive tooth comprises only one first side surface facing in a first direction of travel and only one second side surface facing in a second direction of travel.

Each drive tooth comprises a leading edge and a trailing edge in the longitudinal direction of the drive chain, and wherein the at least one curved drive surface is located on at least one of the leading edge and the trailing edge of the drive tooth.

Between the oppositely orientated side surfaces of the drive tooth is solid tooth material.

According to an embodiment, each drive tooth comprises a top of tooth which is without any drive surface providing tooth contact between the drive chain and the conveyor chain. In other words, a top surface of the tooth is not provided with any drive surface for transmitting driving forces but is only an idle surface without any specific purpose. Therefore, the top surface may have a simple flat configuration, for example.

According to an embodiment, the top surface may be provided with any other planar surface, slanted surfaces, or outwardly curved shapes.

According to an embodiment, each drive surface has a shape of a quadrant. Then the drive surface has a relatively large contact area for transmitting drive forces which is advantageous at least regarding durability of the structure.

According to an embodiment, each drive tooth comprises two drive surfaces provided on opposite outermost side surfaces whereby the tooth comprises the drive surfaces facing towards a conveying direction of travel and towards an opposing reversing direction of travel. In other words, each drive tooth comprises a first drive surface on a first side surface and a second drive surface on an opposite second side surface. Between the oppositely orientated drive surfaces of the drive tooth is solid tooth material. The first side surface is a leading edge of the tooth, and the second side surface is a trailing edge of the tooth. Then the drive unit can be implemented for driving the conveyor in both directions of travel. An advantage of the disclosed embodiment is that the reverse direction driving can be used when executing maintenance operations and when there occurs some other reasons to reverse the objects or material on the conveyor. It is also possible to provide a conveyor which can be implemented as a two-way conveyor wherein transporting direction can be selected in a simple manner just by reversing the driving direction. Thus, the disclosed embodiment allows an easy way to update the conveying systems.

According to an embodiment, the drive unit comprises a guide arrangement for directing the drive teeth into contact with the conveyor chain and for directing the drive teeth apart from the conveyor chain. In other words, the drive unit comprises a drive section wherein the drive teeth are in engagement with the conveyor chain. The drive chain is configured to be without the engagement with the conveyor chain elsewhere than at the drive section.

According to an embodiment, the disclosed solution relates also to a chain conveyor for conveying objects or material and comprising: a body; a conveyor chain assembly provided with a pair of endless conveyor chains arranged parallel in a longitudinal direction of the conveyor; a first idler sprocket assembly and second idler sprocket assembly around which the conveyor chains are supported for moving the conveyor chain assembly on a first strand constituting a material-transport strand, and on a second strand constituting a return strand oppositely-moving to the first strand; a plurality of support rolls mounted to the conveyor chains for supporting the conveyor chain assembly to support surfaces of the body below the first strand; and a drive unit for driving the conveyor chain assembly in the longitudinal direction. The drive unit is in accordance with the features and embodiments disclosed in this document. Furthermore, a drive chain of the drive unit is located inside a closed loop configuration of the endless conveyor chain assembly, and protruding drive teeth on an outer surface of the drive chain are in engagement with the conveyor chain assembly at a limited drive section on an inner surface side of the return strand of the conveyor chain assembly.

According to an embodiment, the conveyor chain assembly comprises a plurality of transverse drive rolls arranged between the conveyor chains. Then the drive chain is located between the conveyor chains in a transverse direction of the chain conveyor, and further, the protruding drive teeth of the drive chain are in engagement with the drive rolls of the conveyor chain assembly at the drive section.

According to an alternative embodiment, the protruding drive teeth of the drive chain are in engagement with the support rollers of the conveyor chain at the drive section.

According to an embodiment, the chain conveyor is a slat conveyor comprising a plurality of transverse slats on outer surface of the conveyor chain assembly for supporting the objects to be conveyed. An advantage of the slat chain conveyor is a robust and durable structure which requires only little maintenance compared to typical other conveyors, such as belt conveyors. The slats of the slat conveyor are also gentle against the objects being transported and no rubbing and other undesired mechanical effects occur whereby damages on surfaces of the objects being transported can be avoided.

According to an embodiment, the disclosed solution relates to a method for operating a chain conveyor. The method comprises: transporting objects or material on an endless conveyor chain assembly of the chain conveyor; driving the conveyor chain assembly in a longitudinal direction by means of a drive unit comprising a drive chain arranged inside the endless conveyor chain assembly and comprising a plurality of drive teeth on an outer surface of the drive chain; and moving the conveyor chain assembly on a first strand constituting a material-transport strand, and on a second strand constituting a return strand oppositely-moving to the first strand. The method further comprises guiding curved drive surfaces of the drive teeth into engagement with the return strand of the conveyor chain assembly at a limited drive section inside the endless conveyor chain assembly and transmitting driving forces from leading edge surfaces of the drive teeth to the conveyor chain assembly.

The above disclosed embodiments may be combined to form suitable solutions having those of the above features that are needed.

### Brief description of the figures

Some embodiments are described in more detail in the accompanying drawings, in which
Figure 1 is a schematic side view of a chain conveyor,
Figures 2 and 3 are schematic and enlarged side views of idler sprocket assemblies of the chain conveyor of Figure 1;
Figure 4 is a schematic side view of a drive unit arranged inside a loop of a conveyor chain,
Figure 5 is a schematic diagram of some features of a chain conveyor,
Figure 6 is a schematic top view of a drive unit,
Figure 7 is a schematic side view showing a guide arrangement for directing the conveyor chain into contact with drive teeth of a drive chain;
Figure 8 is a schematic side view of a chain link comprising a drive tooth with drive surfaces,
Figure 9 is a schematic side view of a chain link and a schematic illustration of resultant forces generated when drive forces are transmitted through a drive tooth,
Figure 10 is a schematic view of a conveyor chain assembly seen in a longitudinal direction of a chain conveyor, and
Figure 11 is a schematic view of a conveyor chain assembly seen in a transverse direction.

For the sake of clarity, the figures show some embodiments of the disclosed solution in a simplified manner. In the figures, like reference numerals identify like elements.

### Detailed description of some embodiments

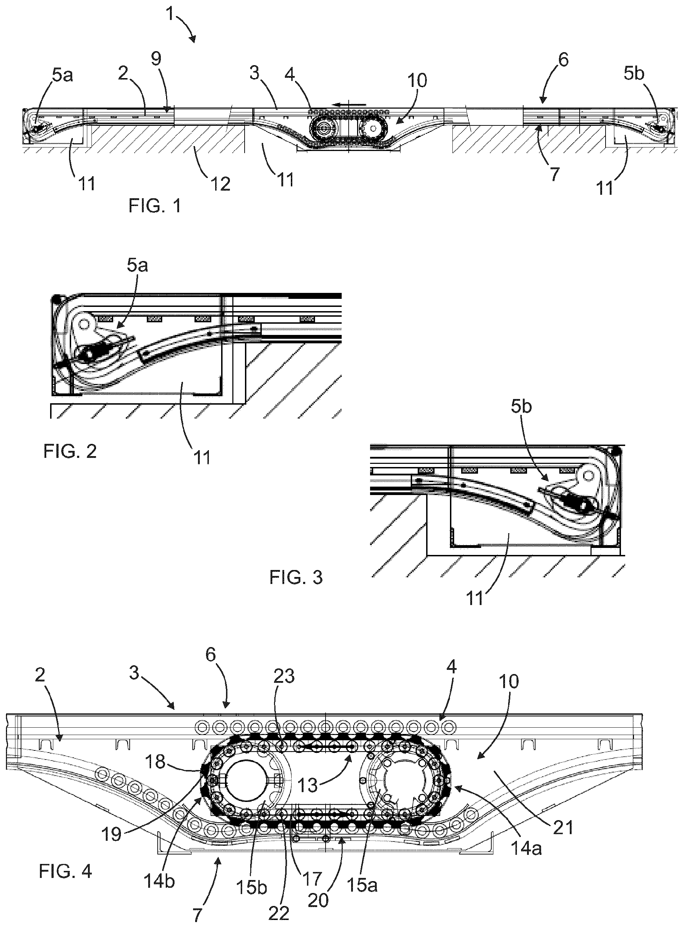

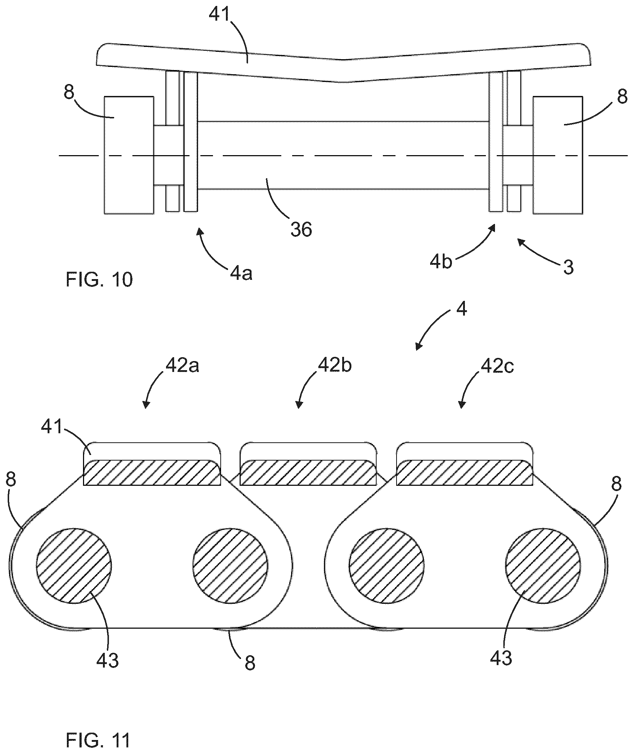

Figure 1 discloses a chain conveyor 1 which can be used for conveying objects or material. The chain conveyor 1 comprises a body 2 and a conveyor chain assembly 3 provided with a pair of endless conveyor chains 4 arranged parallel in a longitudinal direction of the conveyor 1. The structure of the conveyor chain assembly 3 is seen more detailed in Figure 10. There is a first idler sprocket assembly 5a and second idler sprocket 5b assembly around which the conveyor chains 4 are supported for moving the conveyor chain assembly 3 on a first strand 6 constituting a material-transport strand, and on a second strand 7 constituting a return strand oppositely-moving to the first strand 6. As it is shown more clearly in Figure 10, there is a plurality of support rolls 8 mounted to the conveyor chains 4a, 4b for supporting the conveyor chain assembly 3 to support surfaces 9 of the body 2 below the first strand 6. The chain conveyor 1 further comprises a drive unit 10 for driving the conveyor chain assembly 3 in the longitudinal direction.

Figures 1 - 3 disclose that the chain conveyor 1 is mountable to a relatively low mounting spaces 11 provided on a floor structure 12. Thereby, construction costs can be affordable, and it is also possible to update present conveying systems by replacing belt conveyors with the disclosed chain conveyor **1.** The disclosed drive unit 10 has a relatively slim structure and can be mounted to the existing mounting spaces 11 of the belt conveyor systems.

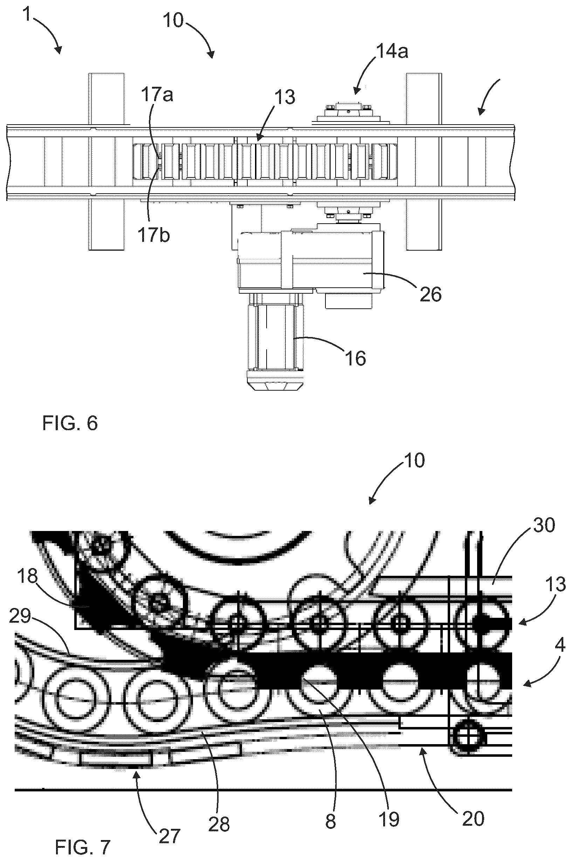

Figure 4 discloses a drive unit 10 which is located inside a closed loop configuration of the endless conveyor chain assembly **3.** Thus, the drive unit 10 is a kind of a caterpillar type device arranged to drive the conveyor chain assembly **3.** The drive unit 10 comprises a drive chain 13 with an endless configuration configured to surround a first sprocket arrangement 14a with at least one first sprocket 15a and a second sprocket arrangement 14b with at least one second sprocket 15b. A motor 16, which is shown in Figure 6, is configured to rotate one of the first and second sprocket arrangements 14a, 14b at least in one rotation direction for moving the drive chain 13 in a longitudinal direction. The drive chain 13 comprises several interconnected first chain links 17a and several interconnected second chain links 17b which are located at a transverse distance from each other, as it is shown in Figure 6.

The drive chain 13 comprises several drive teeth 18 protruding outwardly from the drive chain 13 and comprising curved drive surfaces 19 for transmitting driving forces from the drive unit 14 to the conveyor chain 4.

The protruding drive teeth 18 on the outer surface of the drive chain 13 are guided in engagement with the conveyor chain assembly 3 at a limited drive section 20 on an inner surface side of the return strand 7 of the conveyor chain assembly 3. As can be noted, the drive teeth 18 are not in contact with a first strand 6 constituting a material-transport strand.

The body 2 of the chain conveyor 1 guides the conveyor chain assembly 3 so that there is formed a space 21 for the drive unit 10 between the first and second strands 6, 7.

Figure 4 further discloses that the chain links 17 of the drive chain comprise several chain pins 22 connecting the successive chain links 17 together. A plurality of guide rolls 23 are supported rotatably to the first and second chain links 17 by means of the chain pins 22.

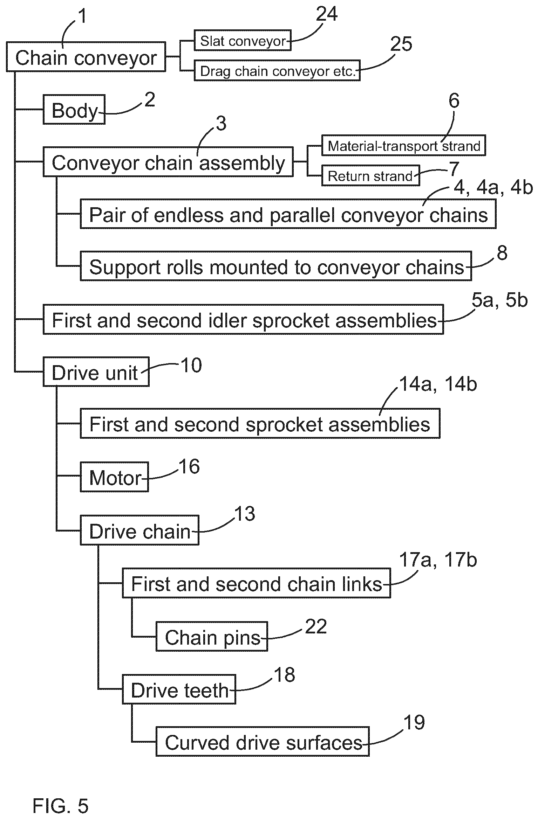

Figure 5 discloses some features of a chain conveyor 1 and its drive unit. The chain conveyor 1 may be a slat conveyor 24 or a drag chain conveyor 25, for example.

Figure 6 discloses a drive unit 19 seen from above a chain conveyor 1. There may be a gear system or other transmission system 26 between an electric motor 16 and a driving sprocket arrangement 14a. Alternatively, a direct drive system can be utilized for driving a drive chain 13.

Figure 7 discloses that a drive unit 10 comprises a guide arrangement 27 for directing drive teeth 18 into contact with the conveyor chain **4.** At an end portion of the drive unit 10 the guide arrangement 27 is configured to direct the conveyor chain 4 apart from the drive teeth 18. Then the drive unit 10 comprises a drive section 20 wherein the drive teeth 18 are in engagement with the conveyor chain **4.** The drive chain 13 is in engagement with the conveyor chain only at the drive section 20. The guide arrangement 27 may comprise one or more plate like pieces or other supporting and guiding elements 28, 29 by means of which the conveyor chain 4 can be guided. Support rolls 8 of the conveyor chain 4 are influenced by the guiding elements 28, 29. There is also a support surface 30 for providing vertical support for a drive chain 13 and thereby facilitating transmission of drive forces.

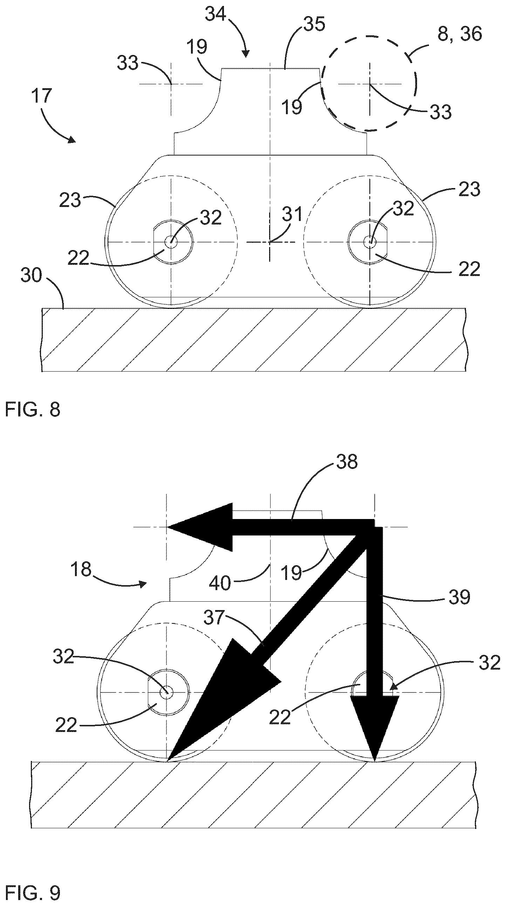

Figure 8 discloses a chain link 17 of a drive chain 13. The chain link 17 comprises a drive tooth 18 with drive surfaces 19. Similar successive chain links 17 are connected to each other by means of transverse chain pins 22. Guide rolls 23 are supported rotatably to the chain link 17 by means of the chain pins 22. The chain link 17 comprises a middle point 31 which is located between transverse central axis 32 of the chain pins 22. The curved drive surface 19 comprises a center of curvature 33 and the center of curvature 33 is located away from the middle point 31 a longitudinal distance towards the central axis 32 of the chain pins 22. In Figure 8 the centers of curvature 33 are located in vertical alignment with the central axis 32 of the chain pins 22.

In Figure 8 the drive tooth 18 comprises two drive surfaces 19 provided on opposite outermost side surfaces whereby the drive tooth 18 comprises the drive surfaces facing towards a conveying direction of travel and towards an opposing reversing direction of travel. Thereby, the area between the oppositely orientated side surfaces is solid tooth material.

The drive tooth 18 comprises a top of tooth 34 which is without any drive surface for transmitting driving forces. The top surface 35 may have a simple flat configuration.

It is also possible to provide the drive tooth 18 with only one drive surface 19. This solution can implemented when the chain conveyor is driven only in one direction of movement.

Figure 8 further discloses that the drive surfaces 19 are curved surfaces and can have a curvature of radius corresponding to a radius of a diameter of the rolls 8, 36 of the conveyor chain.

Figure 9 illustrates generation of resultant force 37 generated when drive force 38 is transmitted through a drive tooth 18. The drive tooth 18 is provided with vertical support force 39 when transmitting the drive force 38. When a drive surface 19 is arranged on a side surface of the drive tooth 18 and is facing towards a direction of travel, then the resultant force 37 caused by force vectors 38, 39 is directed so that the resultant force 37 passes via an area between central axis 32 of chain pins 22. This way jerking of a drive chain and the entire chain conveyor can be avoided since supporting forces of the drive tooth 18 are better controlled. If for example the drive surface 19 was located on a central line 40 of the drive teeth 18, then the resultant force 37 would not pass via the area between the central axis 32 and would thereby cause uncontrolled torque to the drive teeth 18.

Figure 10 shown a conveyor chain assembly **3.** Between conveyor chains 4a, 4b there may be drive rolls 36 which are directed into contact with drive teeth of a drive unit at a drive section. Then the drive unit is arranged between the conveyor chains 4a, 4b. Alternatively, the drive unit may transmit drive forces to support rolls 8. When the chain conveyor is a slat conveyor, then there are transverse slats 41 on outer surface of the conveyor chain assembly 3.

Figure 11 discloses that a conveyor chain 4 comprises several chain links 42a, 42c connected to each other by means of chain pins 43.

The drawings and the related description are only intended to illustrate the idea of the invention. In its details, the invention may vary within the scope of the claims.

## Claims

1. A drive unit (10) for driving a conveyor chain (4) of a chain conveyor (1) in a longitudinal direction of the chain conveyor (1),
wherein the drive unit (20) comprises:
a drive chain (13) with an endless configuration configured to surround a first sprocket arrangement (14a) with at least one first sprocket (15a) and a second sprocket arrangement (14b) with at least one second sprocket (15b);
a motor (16) for rotating at least one of the first and second sprocket arrangements (14a, 14b) at least in one rotation direction for moving the drive chain (13) in a longitudinal direction;
and wherein the drive chain (13) comprises several interconnected first chain links (17a) and several interconnected second chain links (17b) which are located at a transverse distance from each other;
and wherein the first and second chain links (17, 17a, 17b) comprise several chain pins (22) connecting the successive first chain links (17a) together and the successive second chain links (17b) together;
a plurality of guide rolls (23) supported rotatably to the first and second chain links (17, 17a, 17b) by means of the chain pins (22);
and wherein the drive chain (13) further comprises several drive teeth (18) protruding outwardly from the drive chain (13) and comprising curved drive surfaces (19) for transmitting driving forces from the drive unit (10) to the conveyor chain (4);
**characterized in that**
each of the first and second chain links (17, 17a, 17b) comprises, in the longitudinal direction of the drive chain (10), a middle point (31) which is located between transverse central axis (32) of the chain pins (22);
and wherein each curved drive surface (19) comprises a center of curvature (33) and the center of curvature (33) is located away from the middle point (31) a longitudinal distance towards the central axis (32) of the chain pins (22).

2. The drive unit as claimed in claim **1, characterized in that**
the centers of curvature (33) are located in vertical alignment with the central axis (32) of the chain pins (22) when examined in the longitudinal direction of the drive chain (4).

3. The drive unit as claimed in claim 1 or 2, **characterized in that**
the centers of curvature (33) are located at shorter longitudinal distances from the central axis (32) of the chain pins (22) compared to longitudinal distances from the middle points (31).

4. The drive unit as claimed in any one of the preceding claims 1 - 3, **characterized in that**
the drive teeth (18) comprise side surfaces limiting outermost surfaces in the longitudinal direction of the drive chain (4) and wherein the drive surfaces (19) are located only on the side surfaces of the drive teeth (18).

5. The drive unit as claimed in claim any one of the preceding claims 1 - **4, characterized in that**
each drive tooth (18) comprises a top of tooth (34) which is without any drive surface providing tooth contact between the drive chain (13) and the conveyor chain (4).

6. The drive unit as claimed in claim any one of the preceding claims 1 - **5, characterized in that**
each drive surface (19) has a shape of a quadrant.

7. The drive unit as claimed in claim any one of the preceding claims 1 - **6, characterized in that**
each drive tooth (18) comprises two drive surfaces (19) provided on opposite outermost side surfaces whereby the drive tooth (18) comprises the drive surfaces (19) facing towards a conveying direction of travel and towards an opposing reversing direction of travel.

8. The drive unit as claimed in claim any one of the preceding claims 1 - 7, **characterized in that**
the drive unit (10) comprises a guide arrangement (27) for directing the drive teeth (18) into contact with the conveyor chain (4) and for directing the drive teeth (18) apart from the conveyor chain (4).

9. A chain conveyor (1) for conveying objects and comprising:
a body (2);
a conveyor chain assembly (3) provided with a pair of endless conveyor chains (4, 4a, 4b) arranged parallel in a longitudinal direction of the conveyor (1);
a first idler sprocket assembly (5a) and second idler sprocket assembly (5b) around which the conveyor chains (4) are supported for moving the conveyor chain assembly (3) on a first strand (6) constituting a material-transport strand, and on a second strand (7) constituting a return strand oppositely-moving to the first strand;
a plurality of support rolls (8) mounted to the conveyor chains (4) for supporting the conveyor chain assembly (3) to support surfaces (9) of the body (2) below the first strand (6); and
a drive unit (10) for driving the conveyor chain assembly (3) in the longitudinal direction;
**characterized in that**
the drive unit (10) is in accordance with claims 1 - 8;
and wherein the drive chain (13) of the drive unit (10) is located inside a closed loop configuration of the endless conveyor chain assembly (3);
and wherein the protruding drive teeth (18) on the outer surface of the drive chain (13) are in engagement with the conveyor chain assembly (3) at a limited drive section (20) on an inner surface side of the return strand (7) of the conveyor chain assembly (3).

10. The chain conveyor as claimed in claim 9, **characterized in that**
the conveyor chain assembly (3) comprises a plurality of transverse drive rolls (36) arranged between the conveyor chains (4a, 4b);
the drive chain (13) is located between the conveyor chains (4a, 4b) in a transverse direction of the chain conveyor (1);
and the protruding drive teeth (18) of the drive chain (13) are in engagement with the drive rolls (36) of the conveyor chain assembly (3) at the drive section (20).

11. The chain conveyor as claimed in claim 9, **characterized in that**
the protruding drive teeth (18) of the drive chain (13) are in engagement with the support rollers (8) of the conveyor chain (4) at the drive section (20).

12. The chain conveyor as claimed in any one of the preceding claims 9 - 11, **characterized in that**
the chain conveyor (1) is a slat conveyor (24) comprising a plurality of transverse slats (41) on outer surface of the conveyor chain assembly (3) for supporting the objects to be conveyed.

13. A method for operating a chain conveyor (1), the method comprises:
transporting objects or material on an endless conveyor chain assembly (3) of the chain conveyor (1);
driving the conveyor chain assembly (3) in a longitudinal direction by means of a drive unit (10) comprising a drive chain (13) arranged inside the endless conveyor chain assembly (3) and comprising a plurality of drive teeth (18) on an outer surface of the drive chain (13); and
moving the conveyor chain assembly (3) on a first strand (6) constituting a material-transport strand, and on a second strand (7) constituting a return strand oppositely-moving to the first strand (6);
**characterized by**
guiding curved drive surfaces (19) of the drive teeth (18) into engagement with the return strand (7) of the conveyor chain assembly (3) at a limited drive section (20) inside the endless conveyor chain assembly (3);
transmitting driving forces from leading edge surfaces of the drive teeth (18) to the conveyor chain assembly (3).
